# EUROPEAN PATENT SPECIFICATION

(11) **EP 3 348 686 B1**
(45) Date of publication and mention of the grant of the patent: **09.01.2019**
(21) Application number: 17159327.0
(22) Date of filing: 06.03.2017
(51) Int. Cl.: D03D 1/00, A43B 13/00, B32B 27/12, D03D 13/00, D03D 15/00

(54) **WARP AND WEFT MONOLAYER COMPOSITE FABRIC FOR NON-METAL SOLES OF SAFETY FOOTWEAR AND THE INSOLE OBTAINED**
KETT UND SCHUSS MONOLAYER-VERBUNDGEWEBE FÜR NICHTMETALLISCHE SOHLEN VON SICHERHEITSSCHUHWERK UND ERHALTENE INNENSOHLE
TISSU CHAÎNE ET TRAME MONOCOUCHE COMPOSITE POUR SEMELLES NON-MÉTALLIQUES DE CHAUSSURES DE SÉCURITÉ ET SEMELLE INTÉRIEURE AINSI OBTENUE

(30) Priority: 12.01.2017 ES 201730023
(43) Date of publication of application: 18.07.2018
(73) Proprietor: Antonio Moron de Blas, S.L., 26580 Arnedo (ES)
(72) Inventor: MORÓN RUBIO, José Antonio, 26580 Arnedo (ES)
(74) Representative: Sempere Massa, Iván Luis

(56) References cited:
- EP-A1- 2 746 041
- EP-A2- 1 613 185
- WO-A2-2006/040679
- GB-A- 2 193 427
- US-A- 5 996 255

## Description

### TECHNICAL FIELD

The warp and weft fabric of the invention is a monolayer composite fabric consisting of at least 60% high tenacity polyester yarns and/or polyamide yarns and/or polypropylene yarns or mixtures thereof.

Specifically, the fabric of the invention has a very compact structure providing a strength greater than 1000 N, making the use thereof in the soles of safety footwear possible, specifically as it is formed as an insole that is impervious to sharp objects.

### PRIOR ART

A wide variety of soles for safety footwear providing high resistance in situations of risk in which the user may be wounded by a sharp object they step on are known today.

In this sense, soles for safety footwear are known to include in their structure metal materials by way of metal sheets which, despite allowing compliance with very strict safety standards, do not provide the user with the appropriate comfort and lightness to endure long working hours under extreme conditions.

Therefore, being able to provide lighter soles that can also comply with safety standards implemented in situations of risk has been pursued in recent years.

In this sense, fabrics have been disclosed for safety footwear consisting of high-strength materials, such as aramids, ultra high weight molecular polyethylene (UHMWPE), PBO (p-phenylene benzobisoxazole) polymer, glass and/or carbon fibers, for example, but they involve the use of a very costly material, so the insole to be marketed would be an expensive and therefore, less appealing, product.

In this sense, international patent application number WO9913744 discloses an insole consisting of a fabric having multiple layers formed by high-strength synthetic or polymeric fibers such as Kevlar and polyaramid. This fabric necessarily requires of a step of assembling the layers, thereby leading to more steps in the manufacturing process.
On the other hand, international patent application number WO2006040679 discloses a fabric formed by several layers of a double-faced cloth consisting of high toughness polyester fibers, where the layers are bound by a thermoplastic film or an adhesive resin. Each layer is treated with a micronized ceramic material-enriched polymer resin coating.
Patent document number US5965223 discloses a protective fabric formed by layers, which comprises an outer primary layer composed of an abrasive material and an inner primary layer composed of an inherently cut-resistant material, such as polyester.

It must be pointed out that European patent number 1780004 belonging to the same applicant as the present patent discloses a polyester fabric the structure of which has a plurality of layers that are fixed to each other forming a sandwich with the collaboration of intermediate layers made of latex, EVA or polyurethane, the joining of these elements being carried out by means of applying heat and pressure. A fabric with a high degree of resistance to perforation is thereby obtained which, however, maintains good flexibility and is susceptible to being cut, sewn or adhered and can be integrated as an insert in other processes such as vulcanization, blowing etc.

Finally, the patent document number EP2746041 A1 discloses a woven fabric made of high tenacity yarns, having threads with yarn counts between 900 to 2000 Dtex. Based on the foregoing, there is still no fabric today consisting of a single layer and suitable for use as a safety insole which, despite being lightweight and cost-effective, has the mechanical strength necessary to comply with strict standards in terms of occupational safety and risk prevention.

### DISCLOSURE OF THE INVENTION

The warp and weft fabric of the invention is used as an insole that is impervious to sharp objects in safety footwear for the purpose of providing the user with an insole that is very comfortable and has mechanical strength such that it is capable of passing the strictest standards in terms of occupational safety and risk prevention.

Advantageously, the raw materials used for weaving the warp and weft fabric of the invention are low-cost, so the insole manufactured based on the fabric of the invention is cost-effective, making it very interesting compared to other insoles.

The warp and weft fabric of the invention is formed by at least 60% high tenacity yarns, where the yarns have counts or thickness between 80 and 280 tex, and where each of the yarns consists of filaments having a fineness between 1 and 6 dtex.

The structure that is achieved is a monolayer composite fabric obtained in the warp and weft weaving operation itself, preventing the subsequent assembly of several layers of fabric. The fabric is formed by between 1 and 10 warps bound with between 5 and 10 wefts so that a fabric which has a considerable thickness but at the same time is very compact can be obtained.

Specifically and preferably, the high tenacity yarns forming the fabric of the invention are polyester yarns or polyamide yarns or polypropylene yarns or mixtures thereof. In this manner, any of the high tenacity yarns used for obtaining the fabric of the invention will therefore provide the fabric with a high strength.

The warp and weft fabric therefore has a thickness between 2.5 and 6 mm and a mass per unit area between 2000 and 5000 g/m².

Advantageously, the warp and weft fabric provides a strength greater than 1000 N when the mentioned fabric is perforated by a steel nail between 2.5 and 5.0 mm in diameter, so in these conditions the face of the fabric that does not support the pressure of the nail will not be perforated.

Additionally, for the purpose of providing the fabric with conductive properties the structure of the warp and weft fabric has in its weft and/or warp a multifilament made of synthetic polymer enveloped by a conductive yarn.

Along with high tenacity fibers, such as polyester fibers, for example, the fabric of the invention can contain a small percentage of aramid fibers comprised between 1 and 40% for the purpose of providing a product with greater mechanical strength.

Optionally, the warp and weft fabric can have a polymer resin coating, which is preferably deposited by a scraper on at least one of its faces. A fabric with a higher mechanical strength is thus obtained.

The major advantage provided by the fabric of the invention is that it can be used as an insole that will be placed inside footwear classified as safety footwear; therefore any user who, due to their working conditions, requires protection against sharp elements, for example, can wear this footwear provided with the safety insole obtained based on the fabric of the invention.

The advantage provided by the fabric of the invention lies in the fact that it allows the user to feel very comfortable at a low cost without the presence of metal plates in the configuration of the footwear and assuring compliance with required safety standards.

### DESCRIPTION OF THE DRAWINGS

To complement the description that will be made below and for the purpose of aiding to better understand the features of the invention according to preferred practical embodiments thereof, a set of drawings is attached as an integral part of said description, in which the following is depicted with an illustrative and non-limiting character:
Figure 1 shows a view of the arrangement of the weave structure for a fabric of the invention having as many as ten plies, according to an embodiment of the object of the present invention.
Figure 2 shows a three-dimensional simulation of the fabric obtained based on the weave shown in Figure 1.
Figure 3 shows a view of the arrangement of the weave structure for a fabric of the invention having as many as eight plies, according to an embodiment of the object of the present invention.
Figure 4 shows a three-dimensional simulation of the fabric obtained based on the weave shown in Figure 3.
Figure 5 shows a view of the arrangement of the weave structure for a fabric of the invention having as many as six plies, according to an embodiment of the object of the present invention.
Figure 6 shows a three-dimensional simulation of the fabric obtained based on the weave shown in Figure 5.

### DETAILED DISCLOSURE OF THE INVENTION

The monolayer composite fabric of the invention is characterized by providing a very compact structure such that the larger the number of warps and wefts contained therein, the higher the manufacturing and material cost will be, but it will provide greater mechanical strength.

In all the embodiments shown, the fabric of the invention consists of several plies bound along the entire extension thereof and obtained during the actual warp and weft weaving without having to subsequently be assembled.

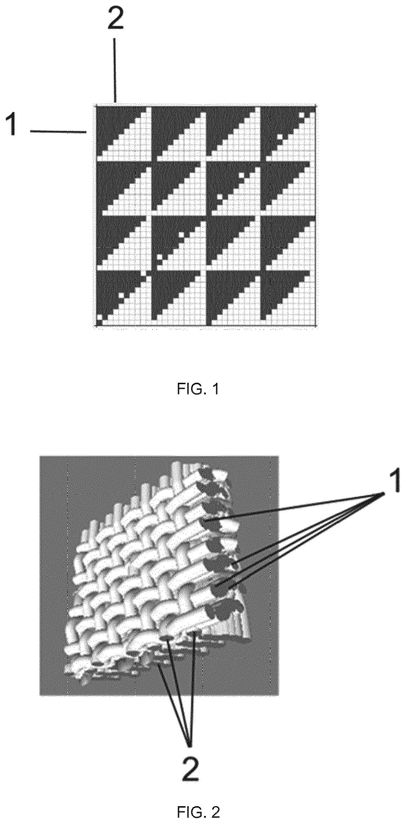

Figure 1 therefore depicts the weave structure of the fabric of the invention having as many as ten plies, whereas Figure 2 depicts the three-dimensional simulation of the weave of Figure 1.

Figure 2 therefore depicts 10 weft woven yarns (1) and 10 warp woven yarns (2) for the fabric having as many as ten plies. While it is true that it is not possible to clearly identify in the simulation obtained for this specific embodiment each of the 10 yarns forming the weft and the respective warp, it is due to the extent to which the mentioned yarns are compressed in a fabric having as many as ten plies.

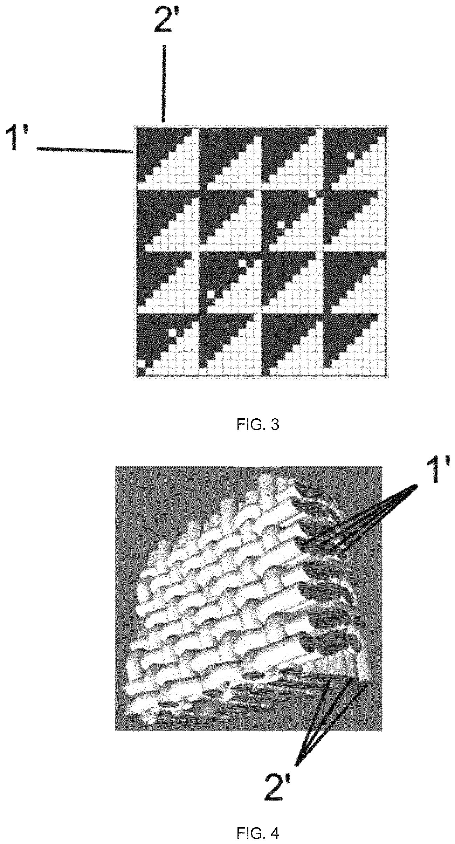

Figure 3 therefore depicts the weave structure of the fabric of the invention having as many as eight plies, whereas Figure 4 depicts the three-dimensional simulation of the weave of Figure 3.

Figure 4 therefore depicts 8 weft woven yarns (1') and 8 warp woven yarns (2') for the fabric having as many as eight plies.

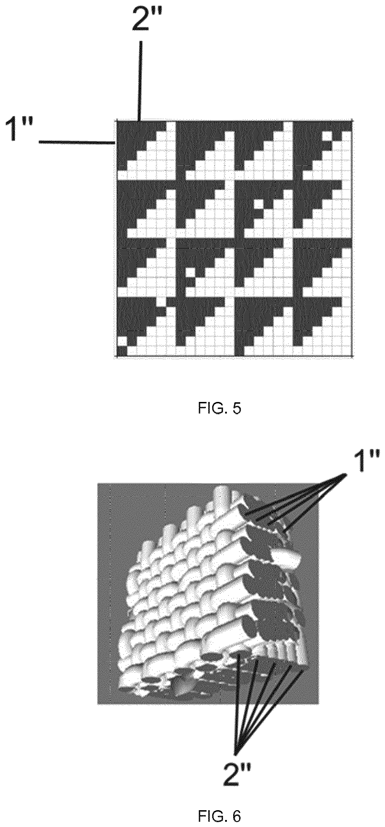

Figure 5 therefore depicts the weave structure of the fabric of the invention having as many as six plies, whereas Figure 6 depicts the three-dimensional simulation of the weave of Figure 5.

Figure 6 therefore depicts 6 weft woven yarns (1") and 6 warp woven yarns (2") for the fabric having as many as six plies.

Taffeta weave was applied to each ply in all cases and by means of the multiple-ply technique, they were overlaid until attaining the required number of plies and binding was performed along the entire extension thereof by means of passing the lower ply over yarns of the upper ply, thereby binding all the components of the ply, forming a single fabric.

## Claims

1. A monolayer warp and weft composite fabric for non-metal soles of safety footwear, containing at least 60% high tenacity yarns with yarn counts between 800 and 2800 Dtex, **characterized in that** each yarn consists of filaments having a fineness between 1 and 6 Dtex, the fabric consists of several plies bound along the entire extension of the fabric and is formed by between 1 and 10 warp plies (2) bound with between 5 and 10 weft plies (1) obtaining a fabric having a thickness between 2.5 and 6 mm and mass per unit area between 2000 and 5000 g/m², the strength thereof being greater than 1000 N as it is perforated by a steel nail between 2.5 and 5.0 mm in diameter and being manufactured by means of warp and weft weaving.

2. The warp and weft fabric for non-metal soles of safety footwear according to claim 1, **characterized in that** the high tenacity yarns are polyester yarns, polyamide yarns, polypropylene yarns or mixtures thereof.

3. The warp and weft fabric for non-metal soles of safety footwear according to any of the preceding claims, **characterized in that** it has in its weft and/or warp a multifilament made of synthetic polymer enveloped by a conductive yarn.

4. The warp and weft fabric for non-metal soles of safety footwear according to any of the preceding claims, **characterized in that** the fabric contains aramid fibers in a percentage comprised between 1 and 40%.

5. The warp and weft fabric for non-metal soles of safety footwear according to any of the preceding claims, **characterized in that** it has a polymer resin coating deposited by a scraper on at least one of its faces, allowing the obtained fabric to provide greater mechanical strength.

6. An insole for footwear obtained based on the warp and weft fabric described according to any of the preceding claims.

## Patentansprüche

1. Kett- und Schuss-Monolayer-Verbundgewebe für nichtmetallische Sohlen von Sicherheitsschuhwerk, mindestens enthaltend 60% hochfester Garne mit Garnnummerns zwischen 800 und 2800 Dtex, **dadurch gekennzeichnet, dass** jedes Garn aus Filamenten besteht, welche eine Feinheit zwischen 1 und 6 Dtex aufweisen, das Gewebe aus mehreren Lagen besteht, welche entlang der gesamten Erstreckung des Gewebes gebunden sind, und aus zwischen 1 und 10 Kettlagen (2), welche mit zwischen 5 und 10 Schusslagen (1) gebunden sind, gebildet ist, unter Erhalt eines Gewebes, welches eine Dicke zwischen 2,5 und 6 mm und ein Flächengewicht zwischen 2000 und 5000 g/m² aufweist, wobei die Festigkeit desselben größer als 1000 N ist, wenn es mit einer Stahlnagel mit einem Durchmesser zwischen 2,5 und 5,0 mm durchbohrt wird und mittels Kett- und Schussweben hergestellt wird.

2. Kett- und Schussgewebe für nichtmetallische Sohlen von Sicherheitsschuhwerk nach Anspruch 1, **dadurch gekennzeichnet, dass** die hochfeste Garne Polyestergarne, Polyamidgarne, Polypropylengarne oder Mischungen derselben sind.

3. Kett- und Schussgewebe für nichtmetallische Sohlen von Sicherheitsschuhwerk nach einem der vorhergehenden Ansprüche, **dadurch gekennzeichnet, dass** es in dessen Schuss und/oder Kette ein Multifilament aufweist, welches aus einem synthetischen, mit einem leitfähigen Garn umhüllten Polymer hergestellt ist.

4. Kett- und Schussgewebe für nichtmetallische Sohlen von Sicherheitsschuhwerk nach einem der vorhergehenden Ansprüche, **dadurch gekennzeichnet, dass** das Gewebe Aramidfasern in einem Anteil enthält, welcher zwischen 1 und 40% liegt.

5. Kett- und Schussgewebe für nichtmetallische Sohlen von Sicherheitsschuhwerk nach einem der vorhergehenden Ansprüche, **dadurch gekennzeichnet, dass** es eine Polymerharzbeschichtung aufweist, welche mittels eines Schabers auf mindestens einer dessen Flächen aufgetragen wird, so dass es erlaubt wird, dass das erhaltene Gewebe eine höhere mechanische Festigkeit bereitstellt.

6. Innensohle für Schuhwerk, erhalten basierend auf dem nach einem der vorhergehenden Ansprüche beschriebenen Kett- und Schussgewebe.

## Revendications

1. Tissu composite monocouche de trame et chaîne pour des semelles non-métalliques de chaussures de sécurité contenant au moins 60% de fils à haute ténacité avec des titrages de fils allant de 800 à 2800 Dtex, **caractérisé en ce que** chaque titrage de fil consiste en des filament ayant une finesse allant de 1 à 6 Dtex, le tissu consiste en plusieurs épaisseurs reliées le long de l'extension toute entière du tissu et est formé de 1 à 10 épaisseurs de trame (2) reliées à 5 à 10 épaisseurs de chaîne (1) obtenant un tissu ayant une épaisseur allant de 2,5 à 6 mm et une masse par unité de surface allant de 2000 à 5000 g/m², sa résistance étant supérieure à 1000 N du fait d'être perforée par une pointe en acier allant de 2,5 à 5,0 mm de diamètre et étant fabriqué par le biais de tissage de trame et de chaîne.

2. Tissu de trame et de chaîne pour semelles non métalliques de chaussures de sécurité selon la revendication 1, **caractérisé en ce que** les fils à haute ténacité sont des fils de polyester, de fils de polyamide, des fils de polypropylène ou un mélange de ceux-ci.

3. Tissu de trame et de chaîne pour semelles non métalliques de chaussures de sécurité selon l'une quelconque des revendications précédentes, **caractérisé en ce qu'**il a dans sa trame et/ou sa chaîne un multifilament réalisé en un polymère synthétique enveloppé par un fil conducteur.

4. Tissu de trame et de chaîne pour semelles non métalliques de chaussures de sécurité selon l'une quelconque des revendications précédentes, **caractérisé en ce que** le tissu contient des fibres d'aramide dans un pourcentage allant de 1 à 40%.

5. Tissu de trame et de chaîne pour semelles non métalliques de chaussures de sécurité selon l'une quelconque des revendications précédentes, **caractérisé en ce qu'**il a un revêtement de résine polymérique déposé par un racleur sur au moins une de ses faces, permettant que le tissu obtenu fournisse une résistance mécanique supérieure.

6. Semelle pour chaussures obtenue basée sur le tissu de trame et chaîne décrit selon l'une quelconque des revendications précédentes.
